# EUROPÄISCHE PATENTANMELDUNG

(11) **EP 4 552 821 A1**
(43) Veröffentlichungstag der Anmeldung: **14.05.2025**
(21) Anmeldenummer: 24211786.9
(22) Anmeldetag: 08.11.2024
(51) Int. Cl.: B29C 45/26, B29C 45/33, B29C 45/36, B29C 45/32

(54) **WERKZEUG ZUM SPRITZGIESSEN VON KUNSTSTOFFTEILEN UND VERFAHREN ZU DESSEN BETRIEB**

(30) Priorität: 08.11.2023 DE 102023130949
(71) Anmelder: Braunform GmbH Kunststoff- und Pharmatechnik, 79353 Bahlingen (DE)
(72) Erfinder: SEEBACHER, Georg Franz, 79350 Sexau (DE); WASMUTH, Gerd, 79288 Gottenheim (DE)
(74) Vertreter: Kleine, Hubertus

(57) **Zusammenfassung**

Ein Werkzeug (1) zum Spritzgießen von Kunststoffteilen (21) umfassend einen Werkzeugplattenstapel (6) mit zumindest zwei gestapelten Aufbauplatten (4, 5, 34, 35, 102, 103, 104), von denen eine Aufbauplatte eine Formplatte (4, 102) zum Tragen mindestens eines Formeinsatzes (7, 105) ist, welcher an oder in der Formplatte (4, 102) angeordnet ist,
wobei der Werkzeugplattenstapel (6) ein Antriebselement zum Bewegen eines Formkerns (10, 35, 60, 110) aufweist,
wobei sich der Formkern (10, 35, 60, 110) in dem Werkzeugplattenstapel (6) bis in den Formeinsatz (7, 105) erstreckt, aufweist,
und wobei das Werkzeug (1) eine Deckplatte (12, 62, 112) aufweist;
wobei der Formkern (10, 35, 60, 110) durch das Antriebselement mittelbar oder unmittelbar bewegbar ist; und
wobei die Deckplatte (12, 62, 112) einen Hohlraum (14, 43, 64, 85, 114) innerhalb des Werkzeugplattenstapels (6) überdeckt, in welchem das Antriebselement zumindest bereichsweise angeordnet ist,
derart, dass die Deckplatte (12, 62, 112) in einer Öffnung (15) des jeweiligen Hohlraumes (14, 43, 64, 85, 114), welchen sie bedeckt, in einer der Aufbauplatten (4, 5; 34, 35, 102, 103, 104) einliegt und sich gegen eine benachbarten Aufbauplatte (4, 5; 34, 35, 102, 103, 104) im Betrieb abstützt, wobei die Deckplatte (12, 62, 112) und das Antriebselement zumindes-tens bereichsweise innerhalb derselben Aufbauplatte (4, 5, 34, 35, 102-104) einliegend angeordnet ist, sowie ein Verfahren zum Betrieb dieses Werkzeugs.

## Beschreibung

Die vorliegende Erfindung betrifft ein Werkzeug zum Spritzgießen von Kunststoffteilen nach dem Oberbegriff des Anspruchs 1 und ein Verfahren zu dessen Betrieb.

Es sind Werkzeuge mit beweglichen Formkernen bekannt. Beispielsweise offenbart die DE 20 2020 101 612 U1 einen rotierbaren Formkern in der Form eines Schneidmessers.

Bei Formeinsätzen sind zahlreiche Schnellwechselsysteme bereits bekannt. Allerdings sitzen einzelne Bauteile zum Antrieb der Formkerne meist in tieferen Ebenen des Werkzeugs und sind deutlich schwerer zugänglich. Zudem sind Schnellwechselsysteme bei mechanisch hochbelasteten Werkzeugen nicht immer die optimale Lösung.

Die Vielzahl von Möglichkeiten der Anwendung von beweglichen Formkernen macht es notwendig, diese unkompliziert und schnell in einem Werkzeug zu wechseln, oder warten zu können.

Außerdem bauen Werkzeuge mit beweglichen Formkernen, wegen der Platzeinnehmenden Antriebsstränge bzw. Getriebe groß auf.

Die große Anzahl an bestehenden Lösungsansätzen erschwert es zudem wirtschaftliche Standards und Normierungen vorzunehmen. Auch der innerbetriebliche Wissenstransfer, der zum möglichst einheitlichen Bau von Werkzeugen mit hohen Funktionsanteil notwendig ist, ist somit erschwert. Daher soll ein gesamtheitliches mit hohem Anteil an Analogien beschaffenes Werkzeugaufbaukonzept mit verschiedene Antriebsfunktionsausführungen geschaffen werden.

Ein großes Potential für den wirtschaftlichen und hochwertigen Werkzeugbau liegt bekannter maßen in der Nutzung von Mehrfachkavitäten-Einsätzen. Bestehende Werkzeuge weisen jedoch das Problem auf, dass die Zugänglichkeit und somit der Wartungsaufwand bei der Nutzung derartiger Werkzeuge sehr hoch ist.

Werkzeuge mit einer großen Anzahl an Kavitäten sind, infolge des in der Kavität wirkenden Spritzdruckes, hoch beansprucht. Insbesondere Antriebseinheiten von beweglichen Formkernen oder Auswerfern schwächen dabei wegen dem hohen Platzbedarf das Werkzeug.

Die Verwendung von hochkavitätigen Werkzeugen widerspricht wegen der aus der Anordnung der Kavitäten hervorgehenden Maxime, den Druckverlust und die Verweilzeit im Heißkanal gering zu halten. Desto größer die Anzahl der Kavitäten, desto größer ist auch der Fließwiederstand im Heißkanal und die Verweilzeit.

Ausgehend von der vorhergehenden Problemstellung ist es daher Aufgabe der vorliegenden Erfindung ein kompaktes, wirtschaftliches und standardisierbares sowie mechanisch hoch beanspruchbares Werkzeug mit Mehrfacheinsätzen bereitzustellen, in welchen Formkerne und die ihm zugeordnete Antriebseinheit einfach, platzsparend und unkompliziert wechselbar, bzw. wartungsfreundlich ist.

Die vorliegende Erfindung löst diese Aufgabe durch den Gegenstand des Anspruch 1.

Ein erfindungsgemäßes Werkzeug zum Spritzgießen von Kunststoffteilen umfasst einen Werkzeugplattenstapel mit zumindest zwei gestapelten Aufbauplatten, von denen eine erste Aufbauplatte eine Formplatte zum Tragen eines Formeinsatzes ist, welcher an der Formplatte angeordnet ist.

Der Formeinsatz kann auch in der Formplatte angeordnet, beispielsweise eingelassen sein. Bevorzugt ist der Formeinsatz austauschbar an oder in der Formplatte angeordnet. Die Formplatte kann insbesondere eine Vielzahl von Formeinsätzen, insbesondere austauschbaren Formeinsätzen, vorzugsweise entlang einer Ebene aufweisen.

Der Werkzeugplattenstapel weist ein Antriebselement zum Bewegen eines Formkerns auf. Das Antriebselement kann Teil einer Moduleinheit und insbesondere Teil eines Aktuators der Moduleinheit sein. Der Formkern ist ebenfalls Teil des Werkzeugs und kann insbesondere Teil der Moduleinheit sein.

Der Formkern erstreckt sich in dem Werkzeugplattenstapel bis in den Formeinsatz, so dass er stirnseitig einen Teil bzw. einen Wandungsbereich zur Begrenzung der Kavität bildet.

Das Antriebselement kann beispielsweise eine Halteplatte sein, welche einen Formkern hält. Alternativ kann der Formkern auch in einer Gewindebuchse gehalten werden, insbesondere sofern er ein dazu korrespondierendes Außengewinde aufweist.

Der Aktuator weist überdies eine Deckplatte, vorzugsweise zum Abstützen des Antriebselements, auf.

Der Formkern wird durch das Antriebselement mittelbar oder unmittelbar bewegt. Die besagte Deckplatte überdeckt einen Hohlraum innerhalb des Werkzeugplattenstapels, in welchem das Antriebselement einliegt.

Die Deckplatte liegt dabei in einer Öffnung des jeweiligen Hohlraumes, welchen sie bedeckt, in der vorgenannten Aufbauplatte ein. Im Betrieb, also unter Druckbeanspruchung stützt dich die Deckplatte gegen eine benachbarte Aufbauplatte ab. Diese Aufbauplatte ist vorzugsweise die zweite der eingangs genannten Aufbauplatten. Zum Abstützen kann die Deckplatte unmittelbar auf der benachbarten Aufbauplatte aufliegen. Es ist allerdings auch möglich, dass die Deckplatte mit wenigen Hundertstel Millimetern von der benachbarten Aufbauplatte beabstandet ist und die Auflage der Deckplatte und der Aufbauplatte zur Abstützung erst durch Biegekräfte im Betrieb erfolgt. Bevorzugt sollte dieser Abstand kleiner sein als vier hundertstel Millimeter.

Die Besonderheit der vorliegenden Erfindung liegt in der Zugänglichkeit des Hohlraumes und des darin angeordneten Antriebselements durch Vorsehen einer Deckplatte. Dabei nimmt die Deckplatte im Rahmen der starken beim Spritzguss herrschenden Schließkräfte eine Abstützfunktion. Dies ermöglicht ein schneller Wechsel der Antriebselemente und/oder der Formkerne.

Dabei ist die Deckplatte und das Antriebselement in kompakter Art und Weise zumindest bereichsweise innerhalb derselben Aufbauplatte einliegend angeordnet. Vorzugsweise ist die gesamte Antriebseinheit mit dem Antriebselement zumindest bereichsweise gemeinsam mit der Deckplatte in der Aufbauplatte angeordnet. Weiter bevorzugt ist die Deckplatte und das vollständige Antriebselement, insbesondere die vollständige Antriebseinheit in der Aufbauplatte einliegend angeordnet.

Weiterhin vorteilhaft ist die bevorzugte Ausgestaltung des Antriebselements als Teil einer Moduleinheit. Bei Öffnung des Hohlraumes kann die Moduleinheit als austauschbare Baugruppe entnommen werden, was einen schnellen Wechsel zusätzlich begünstigt. Insbesondere eine Demontage der einzelnen Elemente des Aktuators ist aufgrund der Ausgestaltung als Moduleinheit nicht notwendig.

Vorteilhafte Ausgestaltungen der Erfindung sind Gegenstand der Unteransprüche.

Es ist für einen kompakten Aufbau von Vorteil, wenn der Hohlraum innerhalb zumindest einer der Aufbauplatten des Werkzeugplattenstapels angeordnet ist, wobei die Aufbauplatte einen Abstützbereich zum Übertragen der Schließkräfte aufweist oder hierfür ein separates Abstützelement im Werkezugplattenstapel eingebaut ist.

Es ist überdies für eine optimale Kraftübertragung von Vorteil, wenn der Abstützbereich auf einer Mittelachse des Formeinsatzes angeordnet ist. Besonders bevorzugt ist der Abstützbereich umfänglich innerhalb des Antriebselementes angeordnet.

Das Antriebselement kann vorteilhaft als eine Halteplatte, vorzugsweise als Teil des Aktuators, ausgebildet sein, welche vorzugsweise über ein Führungssystem geführt ist. Die Halteplatte ermöglicht die Halterung des besagten Formkerns. Bei Austausch der Moduleinheit wird daher auch diese Halteplatte ausgetauscht.

Alternativ kann das Antriebselement vorteilhaft als eine Gewindebuchse, vorzugsweise als Teil des Aktuators, ausgebildet sein. Diese Variante ist insbesondere vorteilhaft, sofern der Formkern über eine Gewindeverbindung, z.B. mit einem Außengewinde des Formkerns, mit der Gewindebuchse wirkverbunden ist.

Das Antriebselement vorteilhaft kann über ein Führungssystem geführt sein. Das besagte Führungssystem kann Teil der Moduleinheit sei oder aber bei Austausch der Moduleinheit als mechanische Koppelmittel im Werkzeug verbleiben.

Das Werkzeug kann ein Betätigungselement aufweisen, welches unmittelbar an der Halteplatte oder über eine Druckplatte des Werkzeugs angreift. Das Betätigungselement kann Teil des Führungssystems sein.

Das Betätigungselement kann als eine Antriebs-Hubleiste, vorzugsweise eine linear-verfahrbare Antriebs-Hubleiste, und/oder eine drehbare Gewindebuchse und/oder eine Gewindespindel, vorzugsweise als eine Kombination aus einer Gewindebuchse und einer Zahnleiste, aufweisen oder als ein solches Element ausgebildet sein. Das Betätigungselement kann, insbesondere im Fall der Gewindebuchse oder Gewindespindel, ebenfalls teilweise oder vollständig Teil der Moduleinheit als komplett-austauschbare Baueinheit sein.

Eine Druckplatte des Werkzeugs, insbesondere der Moduleinheit, kann vorteilhaft mit der Halteplatte verbunden sein, so dass die Druckplatte auf die Halteplatte drückt.

Vorteilhaft kann eine Druckplatte auch mehrere Formkerne betätigen. Entsprechend kann eine Moduleinheit auch mehrere Formkerne umfassen.

Vorteilhaft kann das Führungssystem die Bewegung der Halteplatte oder der Druckplatte führen. Das Führungssystem kann u.a. die vorgenannten Betätigungselemente, sowie Führungsleisten, Führungszapfen, Führungszylinder oder dergleichen umfassen.

Vorteilhaft die Halteplatte und/oder die Druckplatte eine Durchgangsbohrung aufweist, in welcher das Führungssystem, insbesondere einzelne Elemente des Führungssystems wie Lagerzapfen oder dergleichen, einliegt.

Die Halteplatte kann eine Ausnehmung, insbesondere ein Loch, besonders bevorzugt ein zentrales Loch, zur Anordnung eines Abstützbereichs aufweisen. Der Abstützbereich kann zylindrisch ausgebildet sein. Damit erfolgt die Abstützung ohne dass der Hohlraum verformt wird, wobei gleichzeitig die Bewegung des Formkerns gewährleistet bleibt.

Der Formeinsatz kann unmittelbar an einer der Aufbauplatten befestigt sein

Das Betätigungselement kann zumindest zwei oder mehr Antriebs-Hubleisten aufweisen und ein Joch, wobei die Hubleisten durch das Joch zur bewegungssynchronisierten Bewegung, verbunden sind. Dadurch kann eine Verteilung der Betätigungskraft auf mehrere Elemente erreicht werden.

Wie bereits zuvor beschrieben kann das Antriebselement Teil einer Moduleinheit sein, die teilweise oder vollständig in dem vorgenannten Hohlraum angeordnet ist. Insbesondere ist der Aktuator im Hohlraum angeordnet. Die Moduleinheit kann vorteilhaft zusätzlich zum Antriebselement auch den Formkern, bzw. zumindest einen oder mehrere Formkerne, umfassen, welcher oder welche durch das Antriebselement betätigbar sind. Insbesondere kann eine Moduleinheit mehrere einem Formeinsatz zugeordnete Formkerne umfassen.

Weiterhin können Teile des Führungssystems auch Teil der Moduleinheit sein. Es ist auch möglich, dass das gesamte Führungssystem Teil der Moduleinheit ist.

Wird die Moduleinheit somit ausgetauscht wird zugleich das Führungssystem und/oder der oder die Formkerne über den über die Deckplatte zugänglichen Hohlraum gesamtheitlich mit den Antriebselement entnommen.

Das Betätigungselement einer Moduleinheit kann sich über die Breite des Formeinsatzes hinaus erstrecken. Zugleich erstreckt sich das Betätigungselement nicht parallel zum Formeinsatz innerhalb dieser Breite. Dies ist bevorzugt für die Kompaktheit und zur Minimierung von Biegung in der Aufbauplatte sowie zur Schließkraftübertragung.

Es ist von Vorteil, wenn eine Aktuatoreinheit einen Aktuator und zumindest die Anzahl an beweglichen Formkernen, vorzugsweise zwei oder mehr Formkerne, umfasst, welche dem Formeinsatz der Moduleinheit zugeordnet ist. Bei einem Austausch des Formeinsatzes kann auch der Austausch sämtlicher dem Formeinsatz zugeordneter Formkerne durch Entnahme einer einzigen Moduleinheit erfolgen.

Der bewegliche Formkern kann vorteilhaft angeordnet sein zum Entformen, insbesondere zum Entformen von Gewinden als Teilbereich des Spritzgussteils, oder zum Prägen des Spritzgussteils oder zur Bereitstellung eines zweikomponentigen Spritzgussteils durch Rückstellen des Formkerns und/oder zum Ausstoßen und/oder Anheben eines Spritzgussteils. Bislang wurden diese Funktionalitäten lediglich in einem gesonderten Werkzeug und/oder durch Wechsel des Formeinsatzes ermöglicht.

Auch ein Einstellen eines definierten Kunststoffmaßes durch Bewegung des Formkernes kann durchgeführt werden.

Der Formeinsatz ist in einer öffnungsseitigen Formplatte des Werkzeugplattenstapels angeordnet. Insbesondere ist der Formeinsatz in die jeweilige Formplatte eingelassen.

Die Deckplatte kann vorteilhaft größer sein als die bewegliche Halte- und/oder Druckplatte des Moduleinsatzes.

Der Antrieb für die Betätigungselemente kann durch einen Pneumatik- oder Hydraulikantrieb oder besonders bevorzugt durch einen elektrischen Antrieb erfolgen.

Mehrere Moduleinheiten können vorteilhaft zur Realisierung mehrerer Funktionalitäten in dem Formeinsatz hintereinander stapelbar im Werkzeugplattenstapel angeordnet sein.

Mehrere Aufbauplatten können in Stapelrichtung hintereinander angeordnet sind, wobei jeweils eine Aufbauplatte zumindest bereichsweise je eine Moduleinheit in einem Hohlraum aufweist.

Es ist von Vorteil, wenn sich das Führungssystem bzw. eines oder mehrere Elemente des Führungssystems, wie z.B. die Gewindebuchse, über die gesamte Höhe des Hohlraumes erstreckt.

Der Formkern ist vorteilhaft temperiert ausgebildet. Insbesondere weist der Formkern einen Temperierkanal, z.B. ein Sackloch, zur Einleitung eines Temperiermittels auf.

Die Deckplatte kann eine Leitung zur Temperiermittelversorgung zur Temperierung, vorzugsweise zur außenseitigen Temperierung oder zur Innentemperierung, des Formkerns aufweisen.

Das Werkzeug kann eine Haupttrennungsebene mit einer Spritzgussseite und einer Auswerferseite aufweisen, wobei die Moduleinheit auswerferseitig angeordnet ist und aus dem Hohlraum von der haupttrennungsabgewandten Seite einer Aufbauplatte zugänglich, insbesondere demontierbar, ist. Die auswerferseitige Anordnung ermöglicht einen Mehrkomponenten-Spritzguss. Eine düsenseitige Anordnung kann ebenfalls zusätzlich vorgesehen sein, z.B. um eine Entformung zu erleichtern.

Das Werkzeug kann zusätzlich zur Moduleinheit eine Auswerfervorrichtung aufweisen, zum Auswerfen eines im Formeinsatz gebildeten Spritzgussteils. Damit ist die Funktionalität des Auswerfens von der Funktionalität der Moduleinheit z.B. dem Ausformen von Gewinden oder Mehrkomponenten-Spritzguss getrennt.

Die Hubbewegung der Halteplatte kann durch deren Linearführung entlang einer schiefen Ebene erfolgen. Dies kann insbesondere in der Antriebs-Hubleiste bzw. durch die Hubleiste erfolgen. Dadurch kann ein Anheben der Halteplatte in oder entgegen der Stapelrichtung erreicht werden.

Alternativ oder zusätzlich kann die Hubbewegung durch Linearbewegung der Hubleiste entlang einer schiefen Ebene, insbesondere in der Halteplatte, erfolgen.

Die Hubbewegung der Halteplatte kann auch durch deren Rotationsführung entlang einer Gewindebuchse, insbesondere einer drehbar-gelagerten Gewindebuchse erfolgen.

Die Moduleinheit kann paketweise also ohne Demontage aus dem Hohlraum entnehmbar sein. So kann ein Schnellwechsel erfolgen.

Das der Moduleinheit und dem Formeinsatz zugeordnete Betätigungselement kann vorteilhaft durch einen quer zur Betätigungsrichtung liegenden Innenversatz begrenzt sein.

Der Hohlraum kann vorteilhaft zumindest bereichsweise in Mittelachsrichtung der Mittelachse des Betätigungselementes, zwischen der zugehörigen Aufbauplatte und der zugehörigen Deckplatte maximal 0,03 mm größer sein, als die entsprechende Stärke des Betätigungselementes.

Vorteilhaft können mindestens zwei Formeinsätze entlang der Betätigungsrichtung eines zugeordneten Betätigungselementes direkt benachbart angeordnet sein.

Weiterhin vorteilhaft kann eine Mehrzahl an Kavitäten in einem Formeinsatz rotationssymmetrisch um eine Mittelachse, vorzugsweise der Mittelachse des Betätigungselements, angeordnet sein.

Vorteilhaft kann eine Anspritzung einer ersten Komponente des Spritzgussteils seitlich mit Bezug auf die Schließrichtung des Werkzeugs erfolgen.

Die Moduleinheit kann überdies vorteilhaft Formkerne von mehreren dem Werkzeug zugehörigen Formeinsätzen umfassen.

Insbesondere kann die Moduleinheit Formkerne von maximal vier zugehörigen Formeinsätzen umfassen.

Besonders bevorzugt kann der Formkern in einem Winkel ungleich 90° gegenüber Haupttrennungsebene bewegbar sein.

Vorteilhaft kann die Moduleinheit durch ein Abstützelement oder einen Schieber gehalten sein.

Vorteilhaft schließt die Deckplatte mit der Aufbauplatte, in welcher der Hohlraum angeordnet ist, bündig ab. Dadurch erfolgt eine breitflächige Auflage der Aufbauplatte mit der jeweils benachbarten Aufbauplatte.

Der Formkern kann erfindungsgemäß in einem Verfahren zu Betrieb des Werkzeugs zwischen zumindest zwei Betriebspositionen durch das Betätigungselement verfahren werden.

Der Formkern kann sich zwischen den besagten Betriebspositionen durch Rotation bewegen.

Alternativ oder zusätzlich kann sich der Formkern zwischen den Betriebspositionen durch Translation bewegen.

Der Formkern kann eine erste Betriebsposition während des Einfließens einer Kunststoffschmelze in den Formeinsatz einnehmen und eine zweite Betriebsposition zum Prägen des Spritzgießlings einnehmen.

Alternativ oder zusätzlich kann der Formkern eine erste Betriebsposition während des Einfließens einer ersten Komponente einer Kunststoffschmelze in den Formeinsatz einnimmt und eine zweite oder weitere Betriebsposition unter Erweiterung der Spritzguss-Kavität zum Einleiten einer zweiten Komponente einer Kunststoffschmelze einnehmen.

Weiterhin kann das als Gewindebuchse ausgebildete Antriebselement vorteilhaft mit einem Außengewinde eines Formkerns wirkverbunden sein.

Es ist überdies von Vorteil, wenn die Halteplatte eine Ausnehmung, insbesondere ein Loch, zur Anordnung des Abstützbereichs aufweist.

Die Moduleinheit können vorteilhaft einzelne Bauteile des Führungssystems oder das Führungssystem vollständig umfassen.

Weiterhin kann die Moduleinheit mehrere einem Formeinsatz zugeordnete Formkerne umfassen.

Darüber hinaus kann der bewegliche Formkern angeordnet sein zum Entformen, insbesondere zum Entformen von Gewinden als Teilbereich des Spritzgussteils, oder zum Prägen des Spritzgussteils oder zum Einstellen eines definierten Kunststoffmaßes oder zur Bereitstellung einer Kavität zum zweikomponentigen Spritzgussteils durch Rückstellen des Formkerns und/oder zum Ausstoßen und/oder Anheben eines Spritzgussteils.

Mehrere Moduleinheiten können vorteilhaft in Stapelrichtung hintereinander im Werkzeugplattenstapel angeordnet sein.

Weiterhin können mehrere Aufbauplatten in Stapelrichtung hintereinander angeordnet sind, wobei jeweils eine Aufbauplatte zumindest bereichsweise je ein Antriebselement einer Moduleinheit aufweisen.

Darüber hinaus kann sich zumindest ein Element des Führungssystems vorteilhaft über die gesamte Höhe des Hohlraumes erstrecken.

Weitere Vorteile, Merkmale und Einzelheiten der Erfindung ergeben sich aus der nachfolgenden Beschreibung, in ein Ausführungsbeispiel der Erfindung anhand der beiliegenden Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: eine Schnittansicht durch eine Ausführungsvariante eines erfindungsgemäßen Werkzeugs;
- Fig. 2: Detailansicht auf einen ersten Formkern des Werkzeugs mit einem daran angeordneten Spritzgießling;
- Fig. 3: Detailansicht auf einen zweiten Formkern des Werkzeugs mit einem daran angeordneten Spritzgießling;
- Fig. 4: Draufsicht mit Mehrebenen-Darstellung des Werkzeugs der Fig. 1.

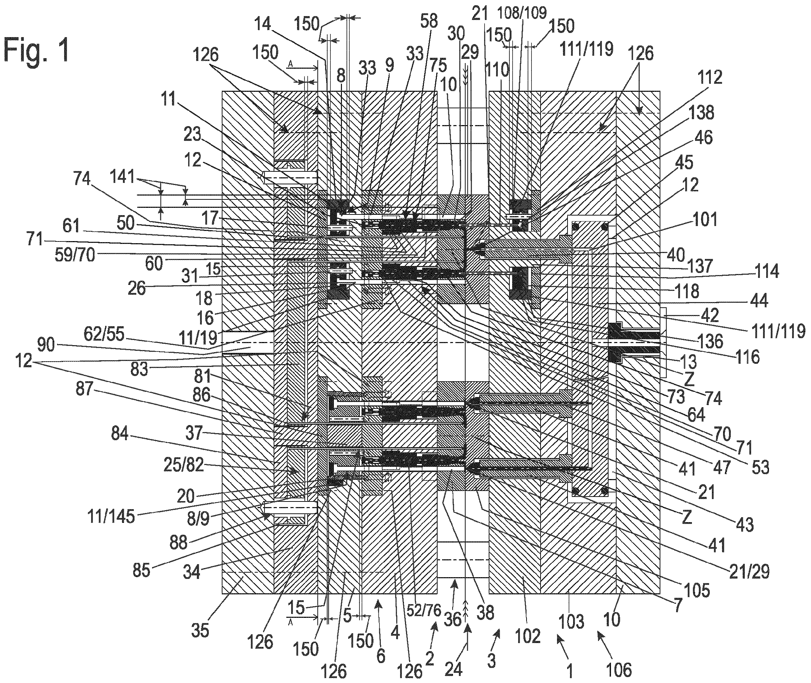

Fig. 1 zeigt ein Werkzeug 1 zum Spritzgießen von Kunststoffteilen, auch Spritzgießling genannt. Das Werkzeug kann im Wesentlichen zumindest eines oder zwei gegeneinander durch Hubbewegung verfahrbare Werkzeugteile aufweisen, wobei das Werkzeug durchaus noch weitere Bauteile als die besagten zwei Werkzeugteile, welche typischerweise als eine Auswerferseite 2 und eine Düsenseite 3 bezeichnet wird, aufweisen kann. Der Fachmann spricht dabei zumeist auch von Werkzeughälften, wobei dieser Terminus nicht impliziert, dass das Werkzeug nicht noch weitere Bauteile, z.B. einen Außenrahmen oder dergleichen umfassen kann. Im Fall der Fig. 1 weist das Werkzeug 1 eine verfahrbare Auswerferseite 2 und eine feststehende Düsenseite 3 auf.

Die Erfindung kann allerdings auch bei einem Werkzeug 1 realisiert werden, welches zum Auswerfen vom Spritzgussteilen nicht zwingend geöffnet werden muss. Diese Werkzeug-Varianten weisen meist weitere konstruktive Details, wie z.B. ein Ableitungssystem auf, allerdings verringern sich dadurch u.a. die Zykluszeiten. Diese Variante wird u.a. in der WO 2021/121977 A1 beschrieben.

Vorzugsweise weist die Düsenseite des Werkzeugs, so z.B. auch die Düsenseite 3, vorzugsweise zumindest eine beheizbare Düse 40/41 auf, wodurch thermoplastische Kunststoffe durch das Werkzeug verarbeitbar sind. Konkret weist die Düsenseite 3 des Werkzeug 1 mehrere Düsen 40/41 auf, welche durch einen rückseitigen Schmelzeleitkanal 101 mit einer Kunststoffschmelze versorgt werden.

Zumeist ist die Auswerferseite 2 auf einem Werkzeugführungssystem 36, z.B. Holmen bzw. Bolzen gelagert und linear beweglich gegenüber der feststehenden Düsenseite 3 gelagert. Dies kann auch in der vorliegenden Erfindung in analoger Weise realisiert werden. Die Düsenseite und die Auswerferseite definieren dabei eine Öffnungsebene - auch Haupttrennungsebene 24 genannt.

Die Auswerferseite 2 und die Düsenseite 3 weisen jeweils eine Abfolge von Aufbauplatten 4, 35, 102, 104 auf, in welchen weitere optional und beispielhafte Aufbauplatten, hier dargestellt 5, 34, 103, und Werkzeugelemente gehalten sind. Diese werden nachfolgend als Werkzeugplattenstapel 6 definiert.

Die Düsenseite 3 weist als Aufbauplatten eine Aufspannplatte 104, sowie einen Schmelzeleitkanalplatte 103 und eine Formplatte 102 auf, wobei die Formplatte eine Stirnseite definiert, welche im geschlossenen Zustand des Werkzeugs nahe der Haupttrennungsebene 24 liegt. In einer nicht dargestellten Alternative kann die Funktion von der Form- und Schmelzeleitkanalplatte in einer alternativen Platte 102 zusammengefasst werden.

Die Auswerferseite 2 weist in Stapelrichtung als Aufbauplatten eine Aufspannplatte 35, und zumindest eine Formplatte 4 auf. Die Formplatte weist eine Stirnseite auf, welche im geschlossenen Zustand des Werkzeugs in der Haupttrennungsebene 24 liegt und insbesondere an der Stirnseite der Formplatte der Auswerferseite 2 an. Je nachdem ob weitere Bauteile und Funktionen benötigt werden können weitere Aufbauplatten in Stapelweise

An die Aufspannplatte 35 der Auswerferseite 2 kann eine nicht-dargestellte Schließvorrichtung, z.B. inklusive Maschinenhebel, angreifen und diese mit einem Druck belasten.

Die vorgenannte auswerferseitige Formplatte 4 dient u.a. der Halterung eines Formeinsatzes 7. Dieser auswerferseitige Formeinsatz 7 weist eine Stirnseite auf, welche zusammen mit einem düsenseitigen Formeinsatz 105 eine Kavität 29 zum Einbringen der Kunststoffschmelze bildet.

Über die beheizbare bzw. beheizte Düse 40/41 wird ein fließfähiges Kunststoffmaterial in die besagte Kavität 29 eingeleitet. Der Formeinsatz 105 kann optional eine Temperierung 28 aufweisen. Die Temperierung 28 kann insbesondere durch Kanäle für ein Kühl- oder Wärmemedium realisiert sein. Analog kann eine Temperierung auch im auswerferseitigen Formeinsatz 7 vorgesehen sein.

Der Formeinsatz 7 weist zudem eine Durchgangsbohrung 30 zur Positionierung eines stiftförmigen Formkerns 10 auf. Dieser ist linear beweglich. Die Stirnseite des Formkerns 10 bildet einen Teilbereich der Kavität 29.

Dieser Formkern 10 ist linear beweglich gelagert. Der Formkern 10 ist Teil einer Moduleinheit 8.

Analog weist der Formeinsatz 105 einen Formkern 110, welcher Teil einer Moduleinheit 108 ist.

In Fig. 1 weist der Aktuator 109 in Form einer Halteplatte eine stirnseitige Vertiefung auf, in welche ein Ende des Formkerns 110 eintaucht. Der Formkern 110 kann ebenfalls linear beweglich gelagert sein.

Die Moduleinheiten 8 und 108 weisen jeweils einen Aktuator 9, 109 auf, welche jeweils ein Betätigungselement 11, 111 - in Fig. 1 in Form einer Antriebs-Hubleiste 19, 119 - sowie eine Halteplatte 16, 116 und eine optionale Druckplatte 18, 118 auf.

Die Halteplatte 16, 116, weist eine Aufnahmeöffnung 31, z.B. als gestufte Bohrung, mit einem ersten Durchmesser und einem rückseitigen zweiten Durchmesser auf. Der zweite Durchmesser ist größer als der erste Durchmesser. Der Formkern 10 weist zum Vorfixieren einen Schaft 32 und zum Halten eine Fußverbreiterung 33 auf. Der Schaft 32 kann z.B. als Rund- oder Mehrkantschaft mit drei oder mehr Kanten ausgebildet sein. Die Fußverbreiterung 33 ist endständig am Schaft angeordnet. Sie schließt vorzugsweise bündig mit der Aufnahmeöffnung 31 ab. Alternativ können die beschriebenen Aufnahmeöffnungen 31 und 31 ` auch nicht kreisförmig ausgebildet sein.

Die optionale Druckplatte zur Übertragung von Druckkräften liegt auf der Halteplatte 16, 116 und/oder auf einer Endfläche des Formkerns 10 bzw. 110, vorzugsweise der Fußverbreiterung 33 des Formkerns 10, auf. Die Übertragung der Druckkräfte kann allerdings auch durch die Halteplatte 16, 116 bei geringer Formanpassung derselben ermöglicht werden.

Der Aktuator 9 bzw. 109 liegt in einem Hohlraum 14 einer Formplatte 6 oder 102 oder in der Zwischenplatte 5 ein. In der dargestellten Figur in der Aufbauplatte 5 bzw. 102. Im vorliegenden Fall ist die Zwischenplatte 5 mit der Formplatte 4 mittels einer angedeuteten Verschraubung 126 verbunden. Die Schrauben liegen allerdings außerhalb des in Fig. 1 dargestellten Schnitts. Es ist selbstverständlich auch möglich, dass die Zwischenplatte 5 und die Formplatte 4 zu einer einzigen Aufbauplatte zusammengefasst werden können, so dass der Hohlraum 14 Teil der Formplatte ist. In jedem Fall sind dann allerdings noch die Rahmenplatte 34 und/oder die Aufspannplatte 35 vorhanden.

Der Hohlraum 8 ist jeweils rückseitig in einer Aufbauplatte, also auf der der Haupttrennungsebenen 24 entfernten Seite, durch eine Deckplatte 12 verschlossen und vor Verschmutzung geschützt.

Nach Entfernen der Deckplatte und der rückseitigen Werkzeugelemente, kann die gesamte Moduleinheit 8, also der Aktuator 9 und der Formkern 10, oder zumindest die beweglich gelagerten Elemente, dem Hohlraum 14 entnommen werden.

Die Betätigungselemente 11 können in Form einer oder mehrerer Hubleiste 19 und/oder Gewindebuchse 20 und/oder Antriebs-Zahnstange ausgelegt sein. Die Gewindebuchse 20 kann auch Teil eines Spindelgetriebes sein.

Fig. 1 zeigt insofern verschiedene Moduleinheiten 8, 8' mit verschiedenen Betätigungselementen 11, 11' in einem Werkzeug. Analog zur Moduleinheit 8 weist auch die Moduleinheit 8' eine Halteplatte 16 und eine Druckplatte 18 auf. Selbstverständlich können in einem Werkzeug auch ausschließlich eine Bauform einer Moduleinheit 8, 8' angeordnet sein.

Entsprechend kann auch die Düsenseite bauartgleiche Moduleinheiten 108 mit Aktuator 109 und Formkern 110 aufweisen, welche in einem mit einer Deckplatte 112 verschlossenen Hohlraum 114 einliegen und welche gesamtheitlich als Modul oder zumindest die bewegbar-gelagerten Elemente der Moduleinheit 108 entnehmbar sind.

Dies ermöglicht einen Schnellwechsel, bzw. eine einfache Wartung des Formkerns und der damit verbundenen Halteplatte und ggf. auch der optionalen Druckplatte oder weiterer Antriebselemente sowohl düsenseitig als auch auswerferseitig. Durch die Untergliederung in einzelne Module können auch nur einzelne Kavität bildende Elemente gewechselt und gewartet werden.

Dabei nehmen insbesondere die Gewindebuchsen 20 und 70 oder andere Elemente des Aktuators im Wesentlichen die Höhe des Hohlraumes 8 ein, so dass sie sich gegen endständige Anschlagflächen abstützen können.

Die Führung der im Hohlraum 14 beweglich geführten Halteplatte 16, 116 und/oder der Druckplatte 18, 118 kann über einen Führungszapfen 36 erfolgen, welcher parallel zur Stapelrichtung des Werkzeugplattenstapels 6 ausgerichtet ist. Das ermöglicht das verschleißarme Antreiben mehrerer Formkerne in einem Aktuator, ohne dass dieser verkantet oder in anderer Weise blockiert.

Weiter ist die Halteplatte 16 und die optionale Druckplatte 18 vorzugsweise rechteckig, oder als Ringscheibe ausgebildet. Dabei weist insbesondere die Halteplatte 16 eine bevorzugt zentrale Öffnung 15 auf. In der Öffnung 15 ist eine beliebig förmige Stützsäule 37 angeordnet, welche sich durch den gesamten Hohlraum 114 erstreckt und den Druck auf die benachbarte Aufbauplatte überträgt. Alternativ kann zwischen Stützsäule und benachbarter Aufbauplatte auch eine Deckplatte 12 bzw. 112 verortet sein, die ebenfalls den Druck zwischen Stützsäule und benachbarter Aufbauplatte überträgt.

Es können auch mehrere Moduleinheiten hintereinander angeordnet sein. Diese Variante ist ebenfalls in Fig. 1 dargestellt. Ob die erste oder zweite hintereinanderliegende Moduleinheit in der Formplatte 4, oder in der Zwischenplatte 5 liegt, muss je nach Funktion und Gestalt der Formkerne 10 bzw. 60 bewertet werden. Die Funktion und Gestalt der Formkerne richtet sich nach der Gestalt von Spritzgussteil 21 bzw. der Kavität 29.

Die Ausführungsform der jeweiligen Moduleinheiten richtet sich zudem ebenfalls nach der Gestalt von Spritzgussteil 21 bzw. der Kavität 29. Es ist auch denkbar zwei Moduleinheiten der gleichen Bauart hintereinander anzuordnen.

Die Formplatte 4 weist überdies einen weiteren Hohlraum 64 auf, welcher in Stapelrichtung vor dem Hohlraum 14 angeordnet ist. Innerhalb des Hohlraums 64 ist ebenfalls ein Formkern 60 angeordnet.

Es können auch mehrere parallele Hohlräume 64 mit entsprechenden Formkernen in der Formplatte 4 angeordnet sein.

Der Hohlraum 64 weist eine Moduleinheit 58 aus einem Aktuator 59 in Form mindestens einer Gewindebuchse 70 und mindestens einer Führungsbuchse 71 auf, welche im axialen Verlauf des Formkerns 60 hintereinander angeordnet sind. Der Hohlraum ist als eine gestufte Bohrung ausgebildet, wobei die Bohrung im hinteren Bereich einen breiteren Durchmesser aufweist als in dem dem Formeinsatz 7 zugewandten vorderen Bereich.

An dem aus der Stufung gebildeten Vorsprung stützt sich die Gewindebuchse 70 mit einem korrespondierenden Vorsprung ab. Der Formkern 60 weist ein Außengewinde 75 auf, welches in ein Innengewinde 73 der Gewindebuchse 70 eingreift. Der Formkern 60 weist ein Sackloch 76 auf, welches sich über zumindest 70%, vorzugsweise zumindest 90% der Länge des Formkerns 60 erstreckt. Das Sackloch ist Teil einer Innentemperierung 52 des Formkerns 60. Endständig weist der Formkern 60 eine Außendichtung 53 auf, welche in einer Öffnung 55 einer Deckplatte 62 andichtend angeordnet ist. Die Außendichtung 53 kann einen oder mehrere Dichtringe oder andere Dichtelemente umfassen.

Die Deckplatte 62 verschließt den Hohlraum 64. In der Öffnung 55 ist überdies ein Kühlleitelement 72 angeordnet, welches eine Einführung eines Temperiermittels über die Formplatte 4 in den Formkern 60 ermöglicht. Zwischen dem Formkern 60 und der Formplatte 6 ist ein Führungssystem 61 z.B. eines oder mehrere Lager, vorzugsweise Kugellager, die an verschiedenen axialen Positionen des Formkerns 60 angeordnet sind.

Die Gewindebuchse 70 und/oder die Führungsbuchse 71 sind als Ringbuchsen ausgebildet. Sie weisen eine mittlere Öffnung 73 auf. Innerhalb dieser Öffnung 73 ist eine Stützsäule bzw. Stützbereich 74 angeordnet, welche unterhalb des Formeinsatzes 7 mittig zu diesem zur Kraftübertragung angeordnet ist.

Die Stützsäulen 37 und 74 liegen somit bevorzugt auf der Mittelachse Z des Formeinsatzes 7. Die Stützsäulen 37, 74 sind wegen der höheren Stabilität vorzugsweise aus Massivmaterial ausgebildet. Alternativ können die Stützsäulen auch als separat einsetzbare Bauteile ausgeführt werden. Das hat wiederum den Vorteil, dass das Einbringen einer Überlänge zur Erschaffung einer Vorspannkraft einfacher hergestellt werden kann.

Analog zur Deckplatte 12 liegt auch die Deckplatte 62 einer Öffnung des jeweiligen Hohlraumes ein und schließt mit der Aufbauplatte, in welcher der Hohlraum angeordnet ist, bündig ab.

Die Rahmenplatte 34 weist ebenfalls einen Auswerfereinheit 81 auf, welche einen Aktuator 82 umfasst. Dieser weist eine Halteplatte 83 und eine optionale Druckplatte 84 zum Halten mindestens eines Auswerfers 50 auf, welche innerhalb eines Hohlraumes 85 der Rahmenplatte 34, angeordnet ist.

Die Halteplatte 83 und/oder die Druckplatte 84 weisen Öffnungen 86 auf, in welchen jeweils eine Stützsäule 87 angeordnet ist. Die Stützsäulen 87 liegen ebenfalls vorzugsweise auf der Mittelachse Z des Formeinsatzes 7 und sind vorzugsweise aus Massivmaterial ausgebildet. Auch hier kann die Stützsäule als separat Bauteil ausgeführt werden.

Der Aktuator 82 wird über ein Führungssystem 88 in Form von Führungszapfen geführt. Die Halteplatte 83 weist einen oder mehrere Auswerferstangen 90 auf, welche durch die Druckplatte 84 mit einem Druck beaufschlagt wird.

Auch die Aufspannplatte 35 und die Rahmenplatte 34 ist mit der Zwischenplatte 5 und der Formplatte 4 durch Verschraubung 126 verbunden.

Düsenseitig sind in der Formplatte die Halteplatte 116 und/oder die Druckplatte 118 ebenfalls vorzugsweise rechteckig ausgebildet mit einer vorzugsweise zentralen Öffnung 136. In der Öffnung 136 ist eine Stützsäule 137 zur Kraftübertragung auf die benachbarten Aufbauplatten 103 und/oder auf den Formeinsatz 105 angeordnet. Die Aufbauplatte 104 ist als Aufspannplatte ausgebildet. In der Stützsäule ist eine Freibohrung 138 zur thermischen Trennung angeordnet, in welcher eine Spritzgussdüse 40 angeordnet ist.

Das Werkzeug 1 der Fig. 1 zeigt zwei oder mehr Spritzgussdüsen 40 und 41, mit welchen ein Zweikomponenten-Spritzguss realisierbar ist. An oder in der Aufspannplatte 104 ist rückseitig ein Zentrierring 42 angeordnet. Benachbart dazu ist in der Aufspannplatte 104 eine Heizbuchse 13 und darin eine Angießbuchse angeordnet. In einem Hohlraum 43 ist ein Heißkanalverteilerblock 44 angeordnet, welcher mit den Spritzgussdüsen 40, 41 verbunden ist. Es können auch mehrere Heißkanalverteilerblöcke für unterschiedliche Kunststoffschmelzen vorgesehen sein.

Ein jeweiliger Heißkanalblock 44 weist ein Heizelement 45 zur Temperierung des Heißkanalblocks 44 auf. Endständig weist die Spitzgussdüse 40, 41 jeweils eine Düsendichtung 46 auf. Innerhalb der Spritzgussdüse ist optional in an sich bekannter Weise eine Verschlussnadel 47 angeordnet.

Nicht in Fig. 1 dargestellt ist ein Antrieb, welcher an mindestens einer der Aufbauplatten seitig angeordnet ist.

Die Moduleinheiten mit den beweglichen Formkernen hat mehrere Vorteile und kann zur Fertigung von Spritzgusskomponenten unter verschiedenen Aufgabenstellungen genutzt werden. Dabei wird, entgegen unterschiedlicher Aufgabenstellungen, durch die Schaffung von Analogien die Fertigungskomplexität und Risiken verringert. Zudem kann innerbetrieblich durch die Normierbarkeit Kosten reduziert werden und der Technologietransfer gefördert werden.

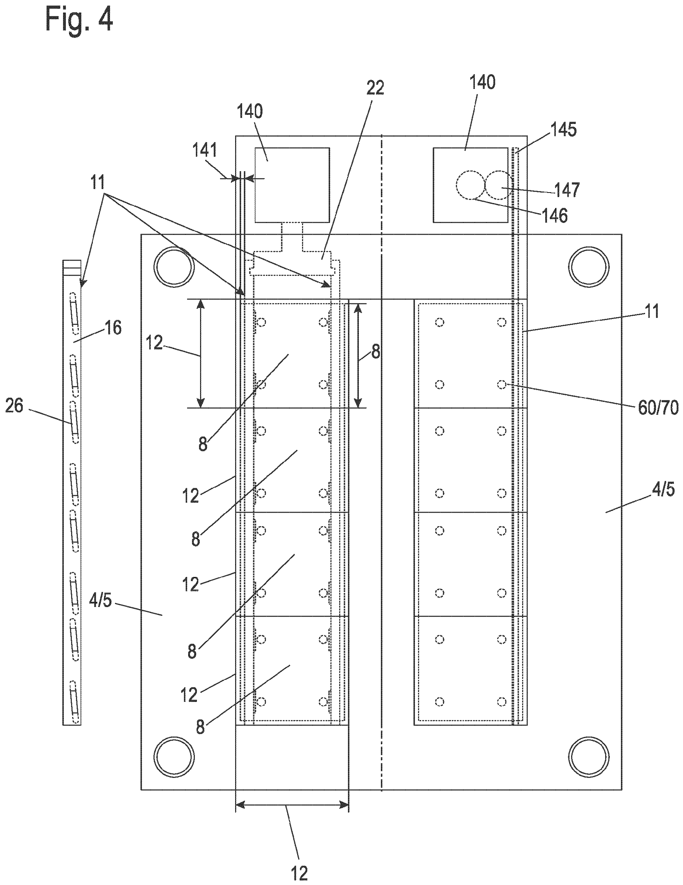

Dabei bewegen sich die jeweiligen Formkerne innerhalb eines vom jeweiligen Hohlraum begrenzten Bewegungsraum 150, 150', damit insbesondere bei Verwendung von Servoantrieben der Antrieb nicht auf Anschlag fährt. Das kann zu Überlastungen und Schäden im Motor führen. Wegen der sehr hohen Fahrgenauigkeit kann der Bewegungsraum je nach Aufgabenstellung auf nahezu 0 reduziert werden. Weiterhin in Fig. 1 ist ein erster und ein zweiter Innenversatz 141 dargestellt. Dieser wird in Fig. 4 näher erläutert. In Fig. 4 wird die Baugruppe aus Formplatte 4 und/oder die Zwischenplatte 5 mit den darin angeordneten Moduleinheiten 8 in der Rückansicht dargestellt. Die Elemente liegen auf unterschiedlichen Ebenen des Werkzeugs 1. Ein elektrischer oder hydraulischer Antrieb 140 betätigt eines oder mehrere Betätigungselemente 11, z.B. Antriebshubleisten. Die Betätigungselemente 11 übertragen, mit oder ohne zusätzliche Getriebeelemente, eine Kraft bzw. Bewegung als Hubeinleitung auf die Aktuatoren 9 der Moduleinheiten 8 und letztendlich auf die Halteplatte 16, oder und 116.

Durch den Innenversatz ist es möglich, besonders kompakte Werkzeuge zu bauen. Die Einsatzgröße richtet sich in erster Linie nach den Aufgabenstellungen der zuverlässigen Formgebung, Wärmeausbringung, Zentrierung und Befestigung. Somit ist es, wie in Fig. 4 ersichtlich, bei Berücksichtigung des Innenversatzes 141 möglich eine Mehrzahl an Formeinsätzen 7 bzw. Modulen 8 direkt benachbart und somit kosten- und platzsparend im Werkzeug anzuordnen.

Durch die vorzugsweise vertikale Anordnung der Betätigungselemente 11 bzw. äquivalent Zahnstangen 145 kann vorteilhaft die Platzierung der Motoren Werkzeugaußenseitig erfolgen. Das verbessert insbesondere die Handhabbarkeit bei Montage und Wartungsarbeiten.

In einer weiteren Ausführungsform ist das Betätigungselement 11 als Zahnstange 145 ausgebildet. Es ist durch ein Zahngetriebe aus mehreren Zahnrädern 146, 147 mit dem Antrieb 140 wirkverbunden. Es ist auch eine andere Art eines Antriebs oder eine Getriebeübersetzung zum Antrieb 140 denkbar.

Die Zahnstange 145 betätigt ebenfalls wie das Betätigungselement 11 den Aktuator. Durch Bewegen der Zahnstange 145, wird vorzugsweise ein Formkern 60, oder eine Gewindebuchse 20 in Rotation versetzt. Das Innengewinde der Gewindebuchse 20 und oder 70 versetzt dabei in beiden Fällen den Formkern 60 bzw. den Aktuator 9 in eine lineare vor- oder rückläufige Bewegung. Somit bilden Formkern 60 und die Gewindebuchse 20 den Aktuator für diesen Anwendungsfall. Vorteilhaft ist dies für Werkzeuge zum Spritzgießen von Spritzgussbauteilen mit Gewinde- oder Spindel-Bereichen.

In einem ersten Aspekt der Verwendung des vorbeschriebenen Werkzeugs kann ein mehrkomponentiges Spritzgussteil gefertigt werden, ohne dass hierfür ein Orts-Wechsel zwischen zwei Formeinsätzen zwingend notwendig ist oder die Position der Formeinsätze zwingend geändert werden muss. Es kann allerdings trotzdem

In einem ersten Schritt kann die Kunststoffschmelze einer ersten Komponente 202 in den Formeinsätzen 105 und 7 unter den entsprechenden Arbeitsdrücken, zur Bildung des Spritzgussteils 21, geleitet werden. Dabei muss ein hoher Druck gegen die Kunststoffschmelze ausgeübt werden. Die Hohlräume, welche eine Materialschwächung der Aufbauplatten bedeuten, werden durch entsprechende Stützelemente, z.B. die vorgenannten Stützsäulen, stabilisiert.

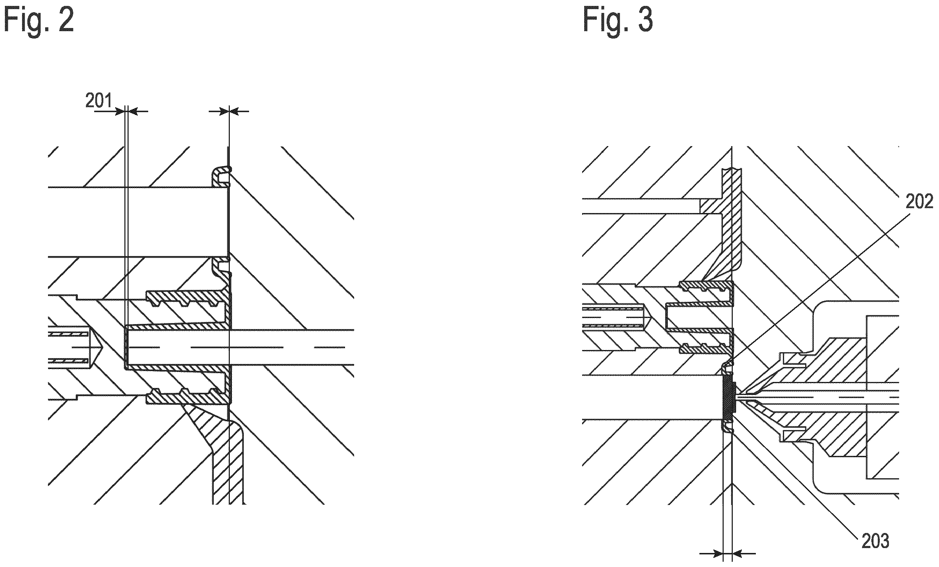

In einer weiteren Ausführungsform wird sodann der Formkern 38 nach dem Einbringen und dem Verfestigen der Kunststoffschmelze, der ersten Komponente, zurückgezogen. Dies ist in Fig. 3 dargestellt. Dadurch wird zusätzlicher Raum für weiteres Kunststoffmaterial frei. Sodann kann eine zweite Komponente 203 in die erweiterte Kavität eingeleitet werden, um das Spritgussbauteil 21 um einen weiteren Funktionsbereich zu erweitern.

Im Ergebnis kann ein Spritgussbauteil 21 -, insbesondere aus zwei mechanisch oder stoffschlüssig verbundenen Materialien, erzeugt werden.

In einem zweiten Aspekt der Verwendung des vorbeschriebenen Werkzeugs können wie zuvor beschrieben Gewinde durch Zurücksetzen des Formkerns gefertigt und entformt werden. Insbesondere wenn der Formkern zusätzlich oder alternativ zur translatorischen Bewegung auch eine rotatorische Bewegung erfolgt, können Gewinde, insbesondere Innengewinde, am Spritzgießling realisiert werden. Bisher gab es keine kompakten und wartungsfreundlichen Werkzeug-Bauformen, die es zudem gestatten weitere Funktionsbereiche wie der hinteren Moduleinheit oder und der hinteren Auswerfereinheit zu platzieren.

Traditionell liegt die Montagereihenfolge von Werkzeug-Bauteilen einzelner Werkzeughälften 2, 3 von der Haupttrennungsebene 24 in die jeweilige Richtung der zugeordneten Aufspannplatte. Das bedeutet, dass für die Wartung einzelner Formeinsätze 7, 105, bzw. Formkerne 10, 38, 60, 110 komplette Betätigungseinheiten inklusive aller beweglichen formgebenden Teile wie Auswerfer 50, und Formkerne 10, 38, 60, 110 demontiert werden müssen. Wartungsfreundlich und somit vorteilhaft im Sinne der Anmeldung bedeutet das, dass lediglich einem beliebigen Modul zugeordnete rückliegende Werkzeug-Bauteile und diesem Modul zugeordneter Deckplatte 12, 112, 62 demontiert werden müssen um die Wartung der zugehörigen Einsätze 7, 105 und oder Formkerne 10, 38, 60, 110 durchzuführen. Bei Verwendung einer Gewindebuchse oder eines Spindelgetriebes, vorzugsweise als Teil der Moduleinheit 8' und wie im Kontext mit Fig. 1 beschrieben, kann eine rotatorische Bewegung des Formkerns realisiert werden.

In einem weiteren Aspekt der Erfindung kann durch Vorsetzen eines Formkerns 110 ein Prägen des Spritzgussteils 21 erfolgen. Durch das Prägen kann z.B. eine zusätzliche Materialverdrängung unter Bereitstellung einer bodenseitigen Dünnwand 201 erfolgen. Dies ist z.B. in Fig. 2 dargestellt. Die Vorteile, wie Wartungsfreundlichkeit, Kompaktheit, Normierbarkeit und somit Wirtschaftlichkeit gilt für diesen Aspekt der Erfindung gleicher maßen.

In einem weiteren Aspekt der Erfindung kann der bewegliche Formkern auch eine Ausstoßbewegung durchführen.

In einer weiteren nicht dargestellten Bauform kann der bewegliche Formkern 10, 38, 60, 110 in einer nicht zur Haupttrennungsebene 24 senkrechten Richtung, vorzugsweise parallel, angeordnet sein. Dabei werden die zuvor beschriebenen Varianten um einen entsprechenden Winkel gedreht und in der Haupttrennebene platziert. Hierbei übernehmen dann Abstützelemente, in eine Formplatte verortet, die Aufgabe der Deckplatte 12, 62, 112. Denkbar sind auch verschiebbare Schieberanordnungen, die die Aufgabe der Halterung und Abdeckung der Moduleinheit übernehmen. Das bringt den Vorteil, dass weitere Formgebungsfreiheitsgrade geschaffen werden.

Wie in den vorbeschriebenen Figuren erkennbar ist, ist die Deckplatte und das Antriebselement zumindest bereichsweise innerhalb derselben Aufbauplatte einliegend angeordnet ist. Vorzugsweise ist die gesamte Antriebseinheit mit dem Antriebselement zumindest bereichsweise gemeinsam mit der Deckplatte in der Aufbauplatte angeordnet. Weiter bevorzugt ist die Deckplatte und das vollständige Antriebselement, insbesondere die vollständige Antriebseinheit in der Aufbauplatte einliegend angeordnet.

### Bezugszeichen

- 1: Werkzeug
- 2: Auswerferseite
- 3: Düsenseite
- 4: Aufbauplatte (Formplatte)
- 5: Aufbauplatte (Zwischenplatte)
- 6: Werkzeugplattenstapel
- 7: Formeinsatz
- 8: Moduleinheit
- 9: Aktuator
- 10: Formkern
- 11: Betätigungselement
- 12: Deckplatte
- 13: Heizbuchse
- 14: Hohlraum
- 15: Öffnung
- 16: Halteplatte
- 17: Führungssystem
- 18: Druckplatte
- 19: Antriebs-Hubleiste
- 20: Gewindebuchse
- 21: Spritzgussteil
- 22: Joch
- 23: Leitung
- 24: Haupttrennungsebene
- 25: Auswerfervorrichtung
- 26: Schiefe Ebene
- 28: Temperierung
- 29: Kavität
- 30: Durchgangsbohrung
- 31: Aufnahmeöffnung
- 31': zweite Aufnahmeöffnung
- 32: Schaft
- 33: Fußverbreiterung

- 34: Aufbauplatte (Rahmenplatte)
- 35: Aufbauplatte (Aufspannplatte)
- 36: Werkzeugführungssystem
- 37: Stützsäule
- 38: Formkern
- 40/41: Spitzgussdüsen
- 42: Zentrierring
- 43: Hohlraum
- 44: Heißkanalverteilerblock
- 45: Heizelement
- 46: Düsendichtung
- 47: Verschlussnadel
- 48: Abstützung
- 49: Anguss
- 50: Auswerfer
- 52: Innentemperierung
- 53: Außendichtung
- 55: Öffnung
- 58: Moduleinheit
- 59: Aktuator
- 60: Formkern
- 61: Führungssystem
- 62: Deckplatte
- 64: Hohlraum
- 70: Gewindebuchse
- 71: Führungsbuchse
- 73: Innengewinde
- 74: Stützsäule / Stützbereich
- 75: Außengewinde
- 76: Sackloch
- 81: Auswerfeinheit
- 82: Aktuator
- 83: Halteplatte
- 84: Druckplatte
- 85: Hohlraum
- 86: Öffnung
- 87: Stützsäule
- 88: Führungssystem
- 90: Auswerfstange

- 101: Schmelzeleitkanal
- 102: Aufbauplatte (Formplatte)
- 103: Aufbauplatte
- 104: Aufbauplatte (Aufspannplatte)
- 105: Formeinsatz
- 108: Moduleinheit
- 109: Aktuator
- 110: Formkern
- 111: Betätigungselement
- 112: Deckplatte
- 114: Hohlraum
- 116: Halteplatte
- 118: Druckplatte
- 119: Antriebsleiste
- 126: Verschraubung
- 136: Öffnung
- 137: Stützsäule
- 138: Führungsbohrung
- 140: Antrieb
- 141: Innenversatz
- 145: Zahnstange
- 146/147: Zahnräder
- 150: Bewegungsraum
- 201: Dünnwand
- 202: erste Komponente
- 203: zweite Komponente

- Z: Mittelachse

## Patentansprüche

1. Werkzeug (1) zum Spritzgießen von Kunststoffteilen (21) umfassend einen Werkzeugplattenstapel (6) mit zumindest zwei gestapelten Aufbauplatten (4, 5, 34, 35, 102, 103, 104), von denen eine Aufbauplatte eine Formplatte (4, 102) zum Tragen mindestens eines Formeinsatzes (7, 105) ist, welcher an oder in der Formplatte (4, 102) angeordnet ist,
wobei der Werkzeugplattenstapel (6) ein Antriebselement zum Bewegen eines Formkerns (10, 35, 60, 110) aufweist,
wobei sich der Formkern (10, 35, 60, 110) in dem Werkzeugplattenstapel (6) bis in den Formeinsatz (7, 105) erstreckt, aufweist,
und wobei das Werkzeug (1) eine Deckplatte (12, 62, 112) aufweist; wobei der Formkern (10, 35, 60, 110) durch das Antriebselement mittelbar oder unmittelbar bewegbar ist; und
wobei die Deckplatte (12, 62, 112) einen Hohlraum (14, 43, 64, 85, 114) innerhalb des Werkzeugplattenstapels (6) überdeckt, in welchem das Antriebselement zumindest bereichsweise angeordnet ist,
derart, dass die Deckplatte (12, 62, 112) in einer Öffnung (15) des jeweiligen Hohlraumes (14, 43, 64, 85, 114), welchen sie bedeckt, in einer der Aufbauplatten (4, 5 34, 35, 102, 103, 104) einliegt und sich gegen eine benachbarten Aufbauplatte (4, 5 34, 35, 102, 103, 104) im Betrieb abstützt, wobei die Deckplatte (12, 62, 112) und das Antriebselement zumindest bereichsweise innerhalb derselben Aufbauplatte (4, 5, 34, 35, 102-104) einliegend angeordnet ist.

2. Werkzeug nach Anspruch 1, **dadurch gekennzeichnet, dass** der Hohlraum (14, 43, 64, 85, 114) innerhalb zumindest einer der Aufbauplatten (4, 5 34, 35, 102, 103, 104) des Werkzeugplattenstapels (6) angeordnet ist, wobei die Aufbauplatte (4, 5 34, 35, 102, 103, 104) einen Abstützbereich zum Übertragen der Schließkräfte aufweist oder hierfür ein separates Abstützelement eingebaut ist.

3. Werkzeug nach einem der vorhergehenden Ansprüche, **dadurch gekennzeichnet, dass** das Antriebselement als eine Halteplatte (16, 83, 116) oder als eine Gewindebuchse (20, 70) ausgebildet ist.

4. Werkzeug nach einem der vorhergehenden Ansprüche, **dadurch gekennzeichnet, dass** das Antriebselement über ein Führungssystem (17, 61, 88) geführt ist.

5. Werkzeug nach einem der vorhergehenden Ansprüche, **dadurch gekennzeichnet, dass** ein Betätigungselement (11, 111) unmittelbar an der Halteplatte (16, 83, 116) oder über eine benachbarte Druckplatte (18, 84, 118) des Werkzeugs (1) angreift.

6. Werkzeug nach einem der vorhergehenden Ansprüche, **dadurch gekennzeichnet, dass** die Druckplatte (18, 84, 118) des Werkzeugs (1) mit der Halteplatte (16, 83, 116) verbunden ist, so dass die Druckplatte (18, 84, 118) auf die Halteplatte (16, 83, 116) drückt.

7. Werkzeug nach einem der vorhergehenden Ansprüche, **dadurch gekennzeichnet, dass** der Formeinsatz (7, 105) unmittelbar an einer der Aufbauplatten (4, 102) befestigt ist.

8. Werkzeug nach einem der vorhergehenden Ansprüche, **dadurch gekennzeichnet, dass** das Werkzeug (1) eine Moduleinheit (8, 58, 108) aufweist, welche zumindest bereichsweise oder vollständig in dem Hohlraum (14, 43, 64, 85, 114) angeordnet ist, wobei die Moduleinheit (8, 58, 108) zumindest das Antriebselement umfasst.

9. Werkzeug nach einem der vorhergehenden Ansprüche, **dadurch gekennzeichnet, dass** die Moduleinheit (8, 58, 108) den Formkern (10, 35, 60, 110) umfasst.

10. Werkzeug nach einem der vorhergehenden Ansprüche, **dadurch gekennzeichnet, dass** sich das Betätigungselement (11, 111) in Betätigungsrichtung über die Breite des Formeinsatzes (7, 105) hinaus erstreckt und sich nicht parallel dazu innerhalb dieser Breite erstreckt.

11. Werkzeug nach einem der vorhergehenden Ansprüche, **dadurch gekennzeichnet, dass** das Werkzeug (1) eine Haupttrennungsebene (24) mit einer Spritzgussseite (3) und einer Auswerferseite (2) aufweist, wobei die Moduleinheit (8, 58, 108) aus dem Hohlraum (14, 43, 64, 85, 114) von der haupttrennungsabgewandten Seite einer Aufbauplatte (4, 5 34, 35, 102, 103, 104) zugänglich, insbesondere demontierbar, ist.

12. Werkzeug nach einem der vorhergehenden Ansprüche, **dadurch gekennzeichnet, dass** die Hubbewegung der Halteplatte (16, 83, 116) durch deren Linearführung entlang einer schiefen Ebene (26), insbesondere in der Hubleiste (19, 119), erfolgt und/oder dass die Hubbewegung durch Linearbewegung der Hubleiste (19, 119) entlang einer schiefen Ebene (26), insbesondere in der Halteplatte (16, 83, 116), erfolgt.

13. Werkzeug nach einem der vorhergehenden Ansprüche, **dadurch gekennzeichnet, dass** eine Mehrzahl an Kavitäten in einem Formeinsatz (7, 107) rotationssymmetrisch um die Mittelachse (Z) angeordnet sind.

14. Werkzeug nach einem der vorhergehenden Ansprüche, **dadurch gekennzeichnet, dass** eine Anspritzung einer ersten Komponente (202) des Spritzgussteils (21) seitlich erfolgt.

15. Verfahren zum Betrieb eines Werkzeugs (1) nach einem der vorhergehenden Ansprüche, **dadurch gekennzeichnet, dass** der Formkern (10, 38, 60, 110) zwischen zumindest zwei Betriebspositionen durch das Betätigungselement (11, 111) verfahren wird.
